# EUROPÄISCHE PATENTANMELDUNG

(11) **EP 0 629 480 A2**
(43) Veröffentlichungstag der Anmeldung: **21.12.1994**
(21) Anmeldenummer: 94109283.5
(22) Anmeldetag: 16.06.1994
(51) Int. Cl.: B29C 33/50, B28B 7/34, B29C 33/38

(54) **Verfahren und Vorrichtung zur Herstellung von Formwerkzeugen**

(30) Priorität: 17.06.1993 DE 4319991
(71) Anmelder: Kähler, Volkhard, D-86150 Augsburg (DE)
(72) Erfinder: Kähler, Volkhard, D-86150 Augsburg (DE)
(74) Vertreter: Munk, Ludwig, Dipl.-Ing.

(57) **Zusammenfassung**

Bei der Herstellung von Formwerkzeugen insbesondere zum Pritzgießen, Blasformen, Schäumen und Erodieren oder dergleichen fallweise auch Maschinenbauteile läßt sich dadurch ein hoher Zeit- und Kostenvorteil erreichen, daß das Formwerkzeug (6, 9) mit einem Silikon-Zwischenschritt (5, 7) über ein Primärformteil (2) direkt vom Original-Funktions-Musterteil (1) abgenommen wird, ohne Schwundberücksichtigung.

## Beschreibung

Die Erfindung betrifft ein Verfahren und eine Vorrichtung zur Herstellung, speziell von Formwerkzeugen, mit den Merkmalen im Oberbegriff des Vorrichtungs- und Verfahrenshauptanspruchs. Die genannten Formwerkzeuge dienen zum Spritzgießen, Blasformen, Schäumen und Erodieren derselben oder dergleichen.

In der Praxis ist es bekannt, daß, wenn Kunstoffteile für ein Seriengerät benötigt werden, in den meisten Fallen das mechanisch hergestellte Modell nur von der Optik seiner Aufgabe gerecht werden kann.

Es wird meist ein Halbzeug und Material verwendet, daß erhältlich ist und daß sich gut fräsen, kleben, feilen, gravieren, lackieren usw. läßt. Viele Materialien stehen für solche Aufgaben nicht zur Verfügung. In den meisten Fällen ist es PVC-Hart. Somit kann zwar in einem gewissen Umfang Marktforschung betrieben werden, jedoch der Funktionstest muß in vielen Fällen so lange zurückgestellt werden, bis ein Original-Spritzteil mit den geforderten spezifischen Materialeigenschaften zur Verfügung steht. Es handelt sich meist um erhöhte Temperatur- und Schlagfestigkeit, also mit Glasfaseranteil von 10-45%, oder ist UV-Stabilisierung gefordert, d. h. mit Rußanteil, oder es wird ein besonders formstabiles mit größeren Flächen ausgestattetes Teil benötigt. Dann ist eine entsprechende Glaskugelfüllung bis ca. 50% erforderlich, oder und antistatisch usw.

Diese vielfältigen und oft kombinierten Anforderungsprofile, die jedoch für das Test-Modell unerläßlich sind, konnten nur mit erheblichem Kosten- und Zeitaufwand realisiert werden.

Damit stellt sich die Aufgabe, einen Weg zu finden, der nicht nur die Zeit für die Produktionsmittel wie Spritzgießwerkzeuge, Blas-, Schäumwerke und Erodierwerkzeuge usw. drastisch senkt, sondern vor allem auch die Kosten.

Die Aufgabe wird erfindungsgemäß damit gelöst, daß bereits das Originalmodell als Abnahmemodell für die Werkzeugkontur herangezogen werden kann, ohne den Schwund des NE-Metalles und den Schwund des zu verarbeitenden Kunststoffes berücksichtigen zu müssen. Zumal das Original-Modell aus jeden nur denkbaren Werkstoff bestehen kann.

Durch einen schwundfreien Silikon-Zwischenschritt von der Außenkontur als Negativ-Abguß und davon wieder einen Positiv-Abguß in Silikon, kann beliebig oft eine Primär-Negativ-Tonform aus porösem Ton von der Außenkontur hergestellt werden. Durch den Trocknungsprozess im Vakuum mit Infrarot-Strahler im Kurzwellenbereich auf Temperatur gebrachte Tonformen, wird so rasch und sicher jede Feuchtigkeit aus diesen entfernt.

Mit diesen hergestellten Positiv-und Negativ-Formen von der Außenkontur des Originalteiles, läßt sich unter Zuhilfenahme der Seitenwände der Anlage als Begrenzung, mit der Negativ-Silikonform eine beliebig oft duplizierbare Düsenseite (Negativseite) des Spritzwerkzeuges aus der NE-Legierung im Vakuum herstellen, in der noch kein Schwund berücksichtigt ist.

Mit der Positiven-Silikonform lassen sich beliebig oft Erodier-Elektroden der Außenkontur herstellen. Mit der Positiv-Silikonform werden nun 2-3 Negativ Tonformen wieder mit Hilfe der Seitenwände der Anlage entnommen bzw. hergestellt. Für normale Spritzwerkzeuge ca. 2-3 Stk. Schruppen, Schlichten, und eventuell Feinschlichten; wieder werden diese im Vakuum mit Infrarot-Strahler auf Temperatur gebracht, getrocknet und auschließend im Vakuum in der Anlage aus dem NE-Metall hergestellt.

Nun wird der Schwund des zu verarbeitenden Kunststoffes beginnend bei dem kleinsten Zeichnungsmaß meistens ist es die Breite hinzugerechnet und dieses Maß wird abzüglich des Funkenspaltes beim Erodieren (0,02-0,04) auf allen 5 Seiten (außer Anschraubseite) aufgekupfert. Danach wird die Elektrode wieder neu vermessen, das Schwundmaß zu dem Zeichnungsmaß in der Länge oder nächst größerem Maß hinzugerechnet, die Breite oder das nächst kleinere Maß abgedeckt und nur noch die Länge oder das nächst größere Maß wieder aufgekupfert. Danach kann die mit Untermaß hergestellte Düsenseite (Negativ-Seite) eines z.B. Spritzwerkzeuges exakt auf Maß nacherodiert werden
Hiemit ist durch diese Neuerung die Möglichkeit geschaffen ganz rasch, ohne großen Maschinen-technischen Aufwand, unter Verwendung nur des Originalmodelles, mehrere Werkzeuge sehr rasch und sehr exact z.B. eine Düsenseite des Spritzwerkzeuges auf Maß im 0.01 Bereich nachzuerodieren. So erhält man billige exakte Spritzwerkzeuge.

Die Auswerferseite wird nun ganz ähnlich hergestellt. Über einen schwundfreien Positiv-Silikonabguß von der Innenseite des Originalmodelles unter Zuhilfenahme der Wandbegrenzungselemente der Anlage, erhält man die Auswerferseite in Silikon jedoch ohne Schwundberücksichtigung. Es werden nun wieder unter Zuhilfenahme der Wandelemente ein oder mehrere Tonabgüsse von dem Positiv-Silikonabguß der Innenkontur des Originalmodelles abgenommen. Wieder werden diese im Vakuum mit Infrarot-Bestrahlung aufgeheizt und getrocknet.

Danach wird eine oder mehrere Auswerferseiten aus der NE-Legierung im Vakuum in der Anlage gefertigt. Dann wird der Schwund wieder zu dem kleinsten Zeichnungsmaß hinzugerechnet, meistens ist es die Breite, der Formstempel wird dann um dieses Untermaß auf allen 5 Seiten aufgenickelt oder aufgechromt. Danach wird wieder neu vermessen. Der Länge wird nun ebenfalls wieder der Schwund des zu verarbeitenden Kunststoffes hinzugerechnet, die Flächen des kleineren Maßes abgedeckt und die Länge oder das nächst großere Maß wieder galvanisch korrigiert. Das maßhaltig exakte Aufgalvanisieren beherrschen eine Vielzahl von Galvanik-Betrieben.

Hiemit ist durch diese Neuerung die Möglichkeit geschaffen, die Auswerferseite beliebig zu duplizieren und sie rasch auf Maß zu korrigieren, nur unter Verwendung des Originalmodelles.

Somit können nur mit Hilfe des Originalmodelles mit der Anlage und Verfahren Serienwerkzeuge für Spritzguß, Blasen, Schäumen und Erodier-Elektroden usw. in ca. 50 % der Zeit konventioneller Stahlwerkzeuge hergestellt werden. Vor allem die Kosten betragen nur 50% und weniger.

Sollte jedoch außer dem Funktions- und Markt-Test-Modell noch ein abgeändertes Modell angefertigt werden in dem der Schwund der NE-Legierung und des zu verarbeitenden Kunststoffes berücksichtigt ist, so kann die Düsenseite wie auch Auswerferseite ohne Erodieren-bzw. Aufkupfern oder Aufnickeln direkt exakt auf Maß in der Anlage hergestellt werden.

Grundsätzlich lassen sich aber von jedem Modell beliebig viele korrigierte oder bereits exakt auf Maß befindliche Elektroden herstellen. Mit diesen kann man in Stahl als auch in die NE-Legierung aufgekupfert oder nicht, hervorragend erodieren. Weiters lassen sich undefinierbar beliebige Trennebenen exakt zueinander Erodieren wie sie bei Figuren, Tieren und ähnlichem auftreten.

Zur Vervollständigung sei erwähnt, daß mit einem Zusatzaggregat auch Maschinen-Serienteile mit der Gieß-Anlage im Vakuum hergestellt werden können.

Als Gießwerkstoff sind vorzugsweise Nichteisen-Metalllegierungen vorgesehen. Besonderen Vorteil hat eine Zinkbasislegierung mit Zuschlägen von Aluminium, Kupfer und Magnesium. Sie eignet sich besonders für Spritzguß- und Erodierwerkzeuge sowie für das vorerwähnte gegenseitige Erodieren der Werkzeughälften. Weiters sei auf das besondere gute Abformverhalten von Oberflächen und ähnlichen hingewiesen. Vorteilhaft sind auch die für die genannte(n) Legierung(en) ausreichenden verhältnismaßig niedrigen Schmelztemperaturen und die guten Verschleiß- und Korrosioneigenschaften des Materials. Hervorzuheben ist die sehr rasche Wärmeableitung der Zinkbasislegierung, die besonders beim Spritzgießen eine Zyklusverkürzung bis ca. 25 % ermöglicht.

Mit Hilfe des Modell-Funktionsmusters können so Produktionswerkzeuge in der Anlage beliebig oft dupliziert und hergestellt werden.

Die Anlage ist ein in sich geschlossener runder, eckiger oder mehreckiger Behälter, in Stahl oder anderen Materialen, in dem eine entsprechend große Tür ist, die Luftdicht verschlossen werden kann. Die Anlage muß so stabil gebaut sein, daß die gesammte Anlage unter Vakuum gesetzt werden kann. Weiters sind in der Anlage das Schmelzaggregat und die Infrarot Strahler untergebracht.

Mit ca. 3 Stk. Elektroden, werden exakte maßgenaue Schnell-Hochleistungswerkzeuge aus der NE-Legierung, bis ca. 300.000 Stk. Ausbringung an Spritzling hergestellt abhängig von der Form und des verarbeitenden Materiales.

Eine wesentliche Leistungssteigerung der Werkzeuge ist durch generelles Hartaufchromen zusätzlich zu erreichen.

Es kann mit den Elektroden, aufgekupfert oder nicht, in Stahl wie auch in die NE-Legierung erodiert werden.

Somit ist es möglich, bei erhöhtem Auftragsbestand oder übergroßen Termindruck, bei Erkennen der Qualitätsminderung bzw. Erreichen der Leistungsgrenze, jederzeit parallel zum bestehendem Werkzeug, ein zweites oder mehrere Produktionswerkzeug(e) sehr rasch und sehr Kostengünstig ohne großen Maschinen-technischen Aufwand herzustellen.

Da sich bei diesem Verfahren jeder Werkstoff so also auch Wachs, Plastelin, Papier, u.v.a. als Modellwerkstoff eignet ist speziell bei den nicht technischen Teilen-Werkzeugen, wie Figuren, Gesichter, Tieren, Pflanzen u.v.a. die Einsparung an Kosten und Zeit extrem hoch.

Die Erfindung ist in den Zeichnungen beispielweise und schematisch dargestellt. Im einzelnen zeigen
- Fig. 1 :: Das Original-Funktions-Musterteil, mit Abnahme der Außenkontur in Negativ und Positiv, in Silikon.
- Fig. 2 :: Einen Positiv-Abguß von Innenkontur in Silikon.
- Fig. 3 :: Herstellen der Auswerferseite. Ein bzw. mehrere Tonabgüsse-Negativ der Innenseite, des Originalmodelles, Trocknen, Ausgießen mit NE-Metall.
- Fig. 4 :: Auschließendes Aufnickeln oder Aufchromen der Schwundmaße am Formstempel oder Auswerferseite.
- Fig. 5 :: Herstellen der Düsenseite eines Spritzwerkzeuges (Negativ-Seite), mit Untermaß bzw. unberücksichtigten Schwund.
- Fig. 6 :: Herstellen von drei Erodier-Elektroden, zum Erodieren der Düsenseite (Negativ-Seite) des Spritzwerkzeuges.
- Fig. 7 :: Schwundausgleich der drei Elektroden durch Aufkupfern.
- Fig. 8 :: Düsenseite wird auf Maß erodiert.
- Fig. 9 :: Zeigt ein Zusatzaggregat mit dem NE-Metallserienteile hergestellt werden können.
- Fig. 10:: Zeigt die Wandbegrenzungselemente, wie sie im Rastenmaß beliebig versetzt werden konnen.
- Fig. 11 u 12:: Zeigt den aus wechselbaren Rost bzw. Arbeitsfläche des Wagens in Draufsicht und Querschnitt.

Die Erfindung betrifft ein Verfahren zur Herstellung von Formwerkzeugen im speziellen, fallweise auch für Maschinen-Serienteile. Die Formwerkzeuge dienen zum Spritzgießen,Blasformen, Schäumen, Tiefziehen, Erodieren oder sonstigen Formgebungsverfahren.

Das Formwerkzeug (6) wird aus einem Primär-Gießteil (2) in einer Gießanlage (3) hergestellt. Dabei wird für das Primärformteil (2) ein poröser Ton verwendet.

Dieses Primärformteil (2) wird vorher in der Anlage (3) im Vakuum (13) mit Infrarot-Bestrahlung (4) getrocknet und danach mit einem schmelzflüssigen Metall (6) ausgegossen.

Vorzugsweise besteht das Metall (6) aus einer Zinkbasislegierung mit Anteilen aus Aluminium, Kupfer und Magnesium.

Das Metall (6) hat eine Schmelztemperatur von ca. 500° - 600° C. Es können aber auch andere geeignete NE-Metallegierungen oder sonstige Flüssigmetalle eingesetzt werden.

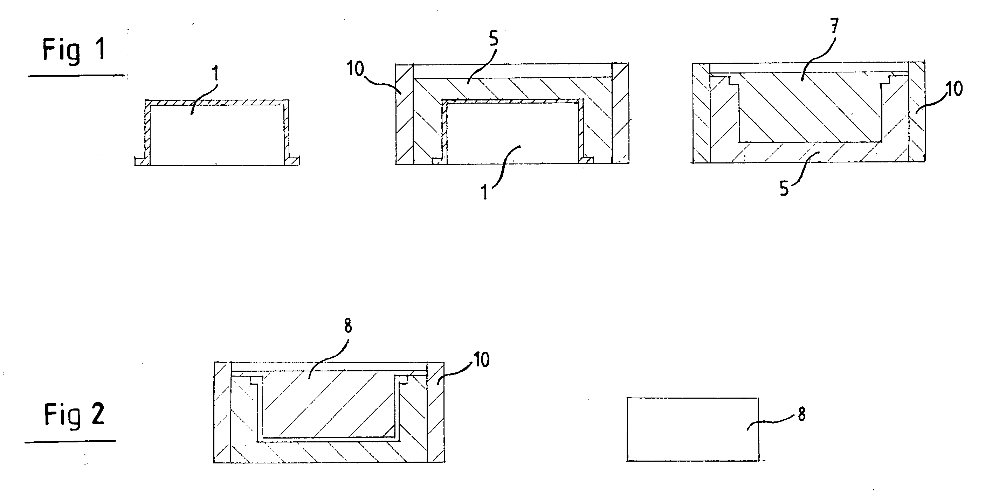

**In Fig. 1** ist das Modell (1) schematisch dargestellt. Es wurde aus einem geeigneten Halbzeug von Hand gefertigt, daß sich gut verarbeiten, verkleben, lackieren usw. läßt, z.B. PVC Hart.

Danach wird die Außenkontur des Modelles (1) in schwundfreiem Silikon (5) abgegossen und davon nochmals die Gegenkontur in schwundfreiem Silikon (7) abgenommen. Somit steht die Außenkontur in Positiv und in Negativ, schwundfrei zur Verfügung.

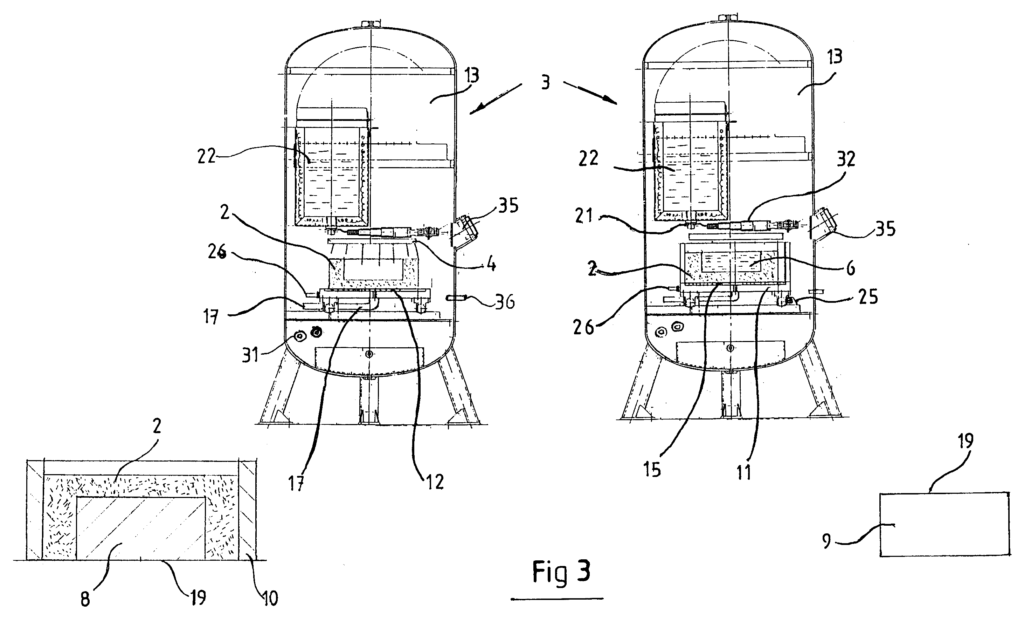

**In Fig. 2** wird schematisch gezeigt, daß die Innenkontur des Modelles (1) in Positiv-Abguß (8) in maßgetreuen schwundfreiem Silikon zur Verfügung steht.

**In Fig. 3** wird schematisch gezeigt wie z.B. eine Auswerferseite (8) eines Spritzwerkzeuges (Positiv-Seite) bzw. Innenkontur des Modelles (1), eines Spritzwerkzeuges hergestellt wird. Von dem positiven Silikonteil (8), es ist der Positiv-Abguß der Negativ-Innenseite des Modelles (1), wird anschließend ein Primärformteil (2) aus porösem Ton gefertigt unter Zuhilfenahme der Wandbegrenzungselemente (10). Diese wird auf den Wagen (11) gelegt, in die Gießanlage (3) gefahren und im Vakuum (13) unter Bestrahlung von Infrarot-Strahlern (4) getrocknet.

Danach werden die Wandbegrenzungselemente (10) zur Stabilisierung der Primär-Tonform (2) die im Rastermaß (14) immer wieder passen, spielfrei zusammengestellt und der Hohlraum der Tonform (2) im Vakuum mit der Metallschmelze gefüllt.

Der Boden des Wagens (11) ist mit einem auswechselbaren Rost (15) versehen. Er besteht aus einer Vielzahl von Lamellen (16) die auf mehreren Führungen (33) parallel aufgezogen sind. Der Lamellenabstand (34) und damit die Größe der wirksamen Saugöffnungen (34) kann variabel sein. Für das Ton-Primärteil können die Ansaugöffnungen (34) groß (ca. 1 mm) sein. Für die Berührung direkt mit der Schmelze sollte der Lamellenabstand (34) nicht größer als ca. 0,2 mm sein. Bei kleineren Gießteil-Abmessungen werden die Flächen außerhalb der Wandbegrenzungen (10) mit weichen Silikontücher abgedeckt. Sobald die Schmelze (6), im Vakuum (13) eingebracht, wird das Vakuum (13) im Kessel (3) aufgehoben und um Restausgasungen vorzubeugen an der Arbeitsfläche (12) des Wagens (11) bleibt das Vakuum (17) bestehen.

Unmittelbar danach wird die Kühlung (26) eingeschaltet und der Abkühlprozess beginnt. Diese Prozess-Reihenfolge kann auch vollautomatisch gesteuert werden.

Fortsetzung Fig. 3 wird weiter gezeigt die Anlage (3) die einen Vakuumanschluß (36) und einen Kühlanschluß (31) besitzt. Die Anlage (3) ist ein luftdicht verschlosser Schalbehälter der rund, eckig oder mehreckig sein kann. Die Anlage (3) besitzt eine entsprechend große Tür, die ebenfalls luftdicht verschließbar sein muß.

In der Anlage (3) befindet sich das Schmelzaggregat (22), der Teleskoparm (32) zum Öffnen des Ventils (21), die Infrarot-Strahler (4), der Wagen (11) mit seinem Auswechselbaren Rost (15). An der Anlage (3) befindet sich ein oder mehrere Fenster (35). Außen wird ein Beistellwagen an die Anlage geschoben, auf den der Wagen (11) gefahren wird und abgestellt und an seinen Bestimmungsort gerollt werden kann.

Die Anlage (3) ist mit einem zusätzlichen Kühlbecken außen angeordnet, ausgerüstet, so daß Vakuum auch in einer erhitzten Anlage hergestellt werden kann, da die Ansaugleitung der Vakuumpumpe durch das Kühlbecken läuft, sich dort so weit abkühlen kann, ohne der Vakuum-Pumpe zu schaden.

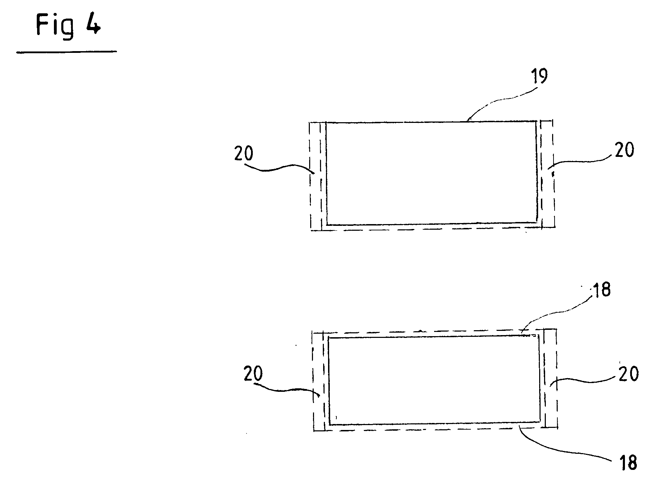

**In Fig. 4** wird schematisch die Korrektur des Schwundmaßes gezeigt. Danach wird das Schwundmaß des zu verabeitenden Kunststoffes, beginnend bei dem kleinsten Zeichnungmaß des Formstempels, hinzugerechnet, meistens ist es die Breite (18), und dieses Maß wird durch Aufnickeln oder Aufchromen oder ähnlich, auf allen fünf Seiten mit dem durch 2 geteilten Maß exakt galvanisch aufgebracht, (außer Anschraubseite).

Danach wird der Formstempel (9) wieder neu vermessen, das Schwundmaß zu dem Zeichnungsmaß in der Länge oder nächst größerem Maß (20) hinzugerechnet, die Breite oder das nächst kleinere Maß abgedeckt (18) und nur noch die Länge oder das nächst großere Maß (20) wieder durch 2 geteilt galvanisch verchromt oder vernickelt oder ähnlich aufgetragen.

Damit wäre der Formstempel der Auswerferseite eines Spritswerkzeuges fertig. Da das Material eine extrem gute Warmeleitfähigkeit besitzt kann in vielen Fällen auf eine Stempelkühlung verzichtet werden, bzw. es lassen sich im Rohling jedoch bereits Kühlschlangen einlegen.

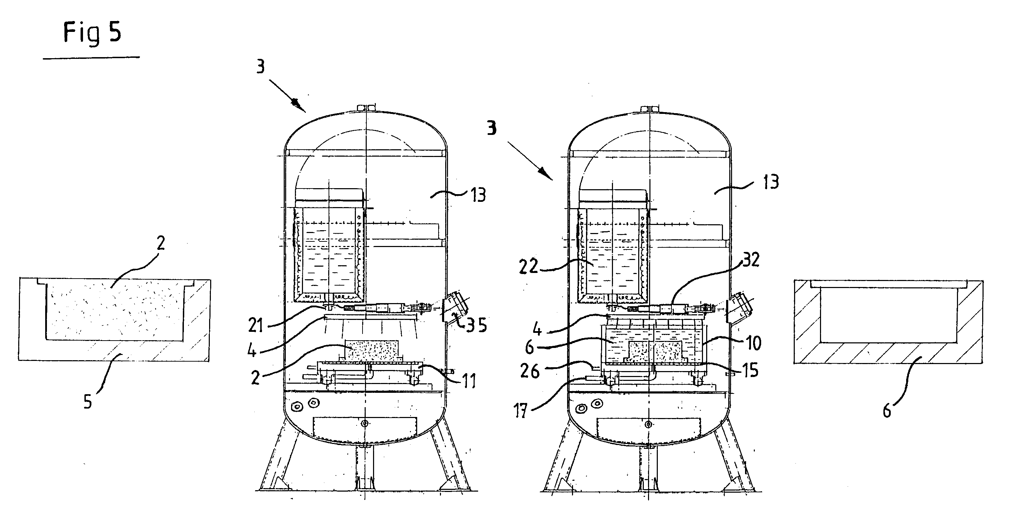

**In Fig. 5** wird schematisch gezeigt, wie die Düsenseite oder Negativ-Seite (6) eines z.B. duplizierten Spritzwerkzeuges hergestellt wird. Es werden in dem Negativ-Silikon-Abguß (5) der Modell-Außenkontur(1) ein oder mehrere Primär-Tonformteile (2) hergestellt.

Dieses wird wieder auf dem Wagen (11) auf den Rost (15) mit eingegossenen Drähten gelegt, zum fixieren auf dem Rost (15), um es gegen Aufsteigen während des Gießprozesses zu fixieren. In der Anlage (3) im Vakuum (13) werden diese mit den Infrarot-Strahlern (4) auf Temperatur gebracht und so rasch und sicher getrocknet. Danach wird durch Aufstellen der Wandbegrenzungselemente (10) das Außenmaß des Gießteiles bzw. Düsenteiles (6) des in diesem Beispiel aufgeführten Spritzwerkzeuges, bestimmt. Das Rastermaß (14)beträgt vorzugsweise 25 mm. Danach nochmaliges Vakuum (13) herstellen, alle Komponenten werden nochmals kurz erhitzt ca. 15 min. durch Infrarot-Bestrahlung (4) im Kurzwellbereich und danach Ausgießen der erhitzten unter Vakuum stehenden Form (6). Durch Öffnen des Ventils (21) elektrisch oder von Hand durch den Teleskoparm (32) des Schmelzaggregates (22), wird die Form (6) mit dem NE-Metall im Vakuum (13) gefüllt. Sobald die Form mit Metall gefüllt, wird das Vakuum das zusätzlich am Boden (17) des Wagens (11) in Betrieb ist auch in Aktion belassen. Das Vakuum (13) in der Anlage wird jedoch aufgehoben. Dadurch entsteht ein zusätzlicher Anpreßeffekt an den Formwänden, wie jedoch bereits bekannt.

Danach Öffnen der im Wagen (11) installierten Kühlung (26). Dadurch Abkühlung des Gießling (6) von der Trennebene aufsteigend zur Anschraub-oder Rückseite des Gießlinges. Erst danach Ausschalten der Infrarot-Bestrahlung. Dadurch wird das Einfallen der Rückseite weitgehendst vermieden. Sämtliche Prozesschritte lassen sich auch hier vollautomatisieren.

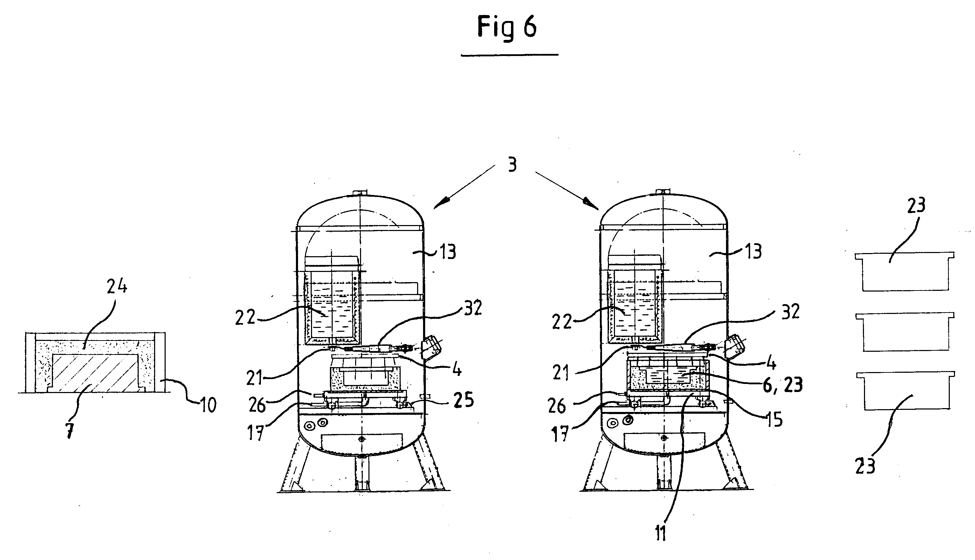

**In Fig. 6** wird schematisch das Herstellen von 3 Elektroden (23) gezeigt, daß sich im Prozessablauf vom Herstellen des Formstempels (8) nur gering unterscheidet. Vom Silikon-Gegenabguß der Außenkontur (7) wird ein oder mehrere Ton-Primärformfeil(e) (24) unter Zuhilfenahme der Wandbegrenzungselemente (10) abgegossen.

Dann werden diese 3 Stk. Primärformteile in der Anlage (3) auf dem Wagen (11) oder auf einer Auflage mit den Infrarot-Strahlern (4) unter Vakuum (13) getrocknet.

Danach wird ein Primärformteil (24) nach dem anderen in dasselbe Rastermaß (14) mit den Wandbegrenzungselementen (10) wie bei dessen Herstellung, eingeschraubt, in die Anlage (3) gefahren, die optimale Füllposition fixiert, durch Anschläge (25) und eventuell Verschieben des Schmelzaggregates (22), Vakuum erzeugt, alles nochmals kurz ca. 15 min. erhitzt. Danach Öffnen des Ventils (21) durch Teleskoparm (32) des Schmelzaggregates (22) und die erhitzte Form (24) wird im Vakuum mit NE-Metall (6) gefüllt. Sobald die Form mit der NE-Metallschmelze (6) im Vakuum (13) gefüllt, wird das Vakuum das zusätzlich am Boden (17) des Wagens (11) in Betrieb steht in Aktion belassen. Das Vakuum (13) in der Anlage wird jedoch aufgehoben. Dadurch entsteht ein zusätzlicher Anpreßeffekt an den Formwänden. (Bereits bekannt!) Danach Öffnen der im Wagen (26) installierten Wasser-Kühlung.

Dadurch Abkühlung des Gießling (23) von der Formfläche aufsteigend zur Rückseite. Erst danach Ausschalten der Infrarot-Bestrahlung (4). Dadurch Vermeidung des Einfallens an der Rückseite. Dieser Vorgang wird für alle 3 Elektroden (23) 3 mal wiederholt. Selbsverständlich läßt sich diese Schrittfolge auch automatisieren.

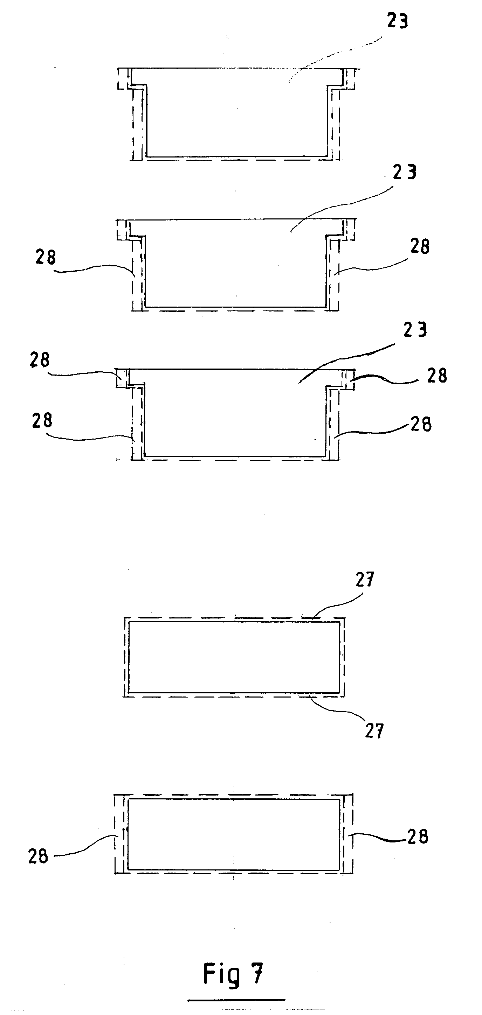

**In Fig. 7** wird wieder nur schematisch gezeigt, wie das Aufkupfern auf Maß der 3 Erodier-Elektroden (23), vor sich geht. Sehr ähnlich dem Vorgang des Formstempels, Fig 3.

Der Schwund des zu verarbeitenden Kunststoffes, beginnend bei dem kleinsten Zeichnungsmaß, meistens ist es die Breite (27), wird diesem Maß oder Breite (27) hinzugerechnet und dieses Maß wird abzüglich des Funkenspaltes beim Erodieren ca. (0,02 - 0,04 mm) auf allen 5 Seiten (außer Anschraubseite), durch 2 geteilt und aufgekupfert.

Danach wird die Elektrode wieder neu vermessen. Das Schwundmaß zu dem Zeichnungsmaß in der Länge oder nächst größerem Maß (28) hinzugerechnet. Die Breite (27) oder das nächst kleinere Maß (27) abgedeckt und nur noch die Länge oder das nächst größere Maß (28) durch 2 geteilt wieder aufgekupfert. Danach wird die Elektrode wieder neu vermessen usw. Damit wird so lange fortgefahren, bis alle Maße korrigiert.

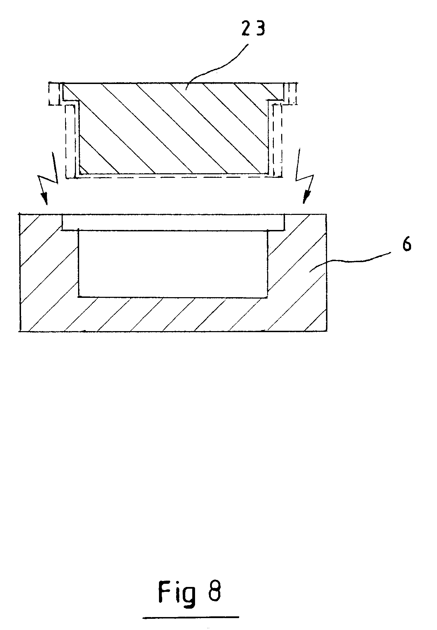

**Fig. 8** zeigt wieder nur schematisch das exakte Maß-Erodieren der Düsenseite (6) (Negativ-Seite) des Spritzwerkzeuges, mit den korrigierten Elektroden (23).

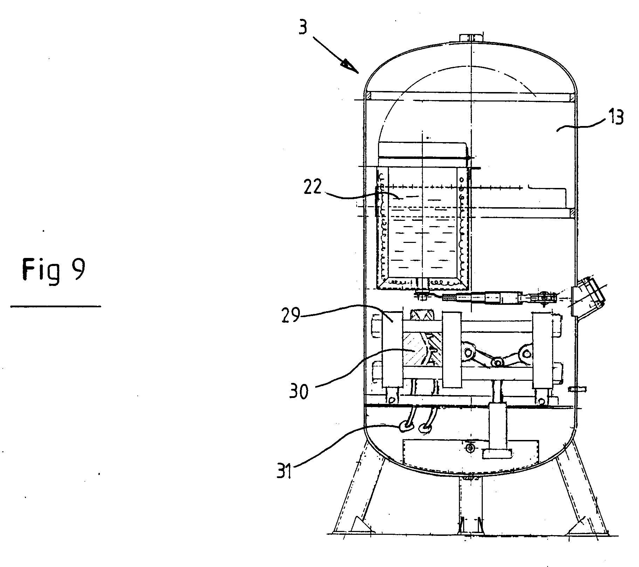

**Fig. 9** zeigt der Vollständigkeit halber, auch nur schematisch, daß mit der Gieß-Anlage (3) und einem Zusatzaggregat (Schließeinheit) (29) und mit, wie in Fig. 7 beschriebenen Erodier-Elektroden (23), hergestelltes Stahlwerkzeug (30), auch NE-Metall-Serienteile hergestellt werden können. Die Teile werden im Vakuum (13) mit eingeschalteter Kühlung (31), gefertigt. Dieser Prozess wird vorzugsweise vollautomatisch ablaufen.

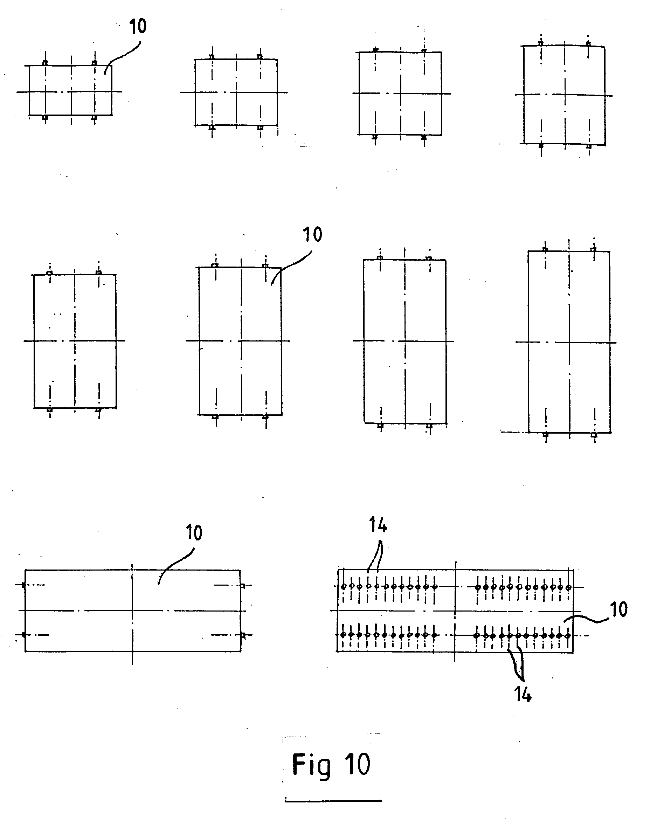

**Fig. 10** zeigt die Wandbegrenzungselemente (10). Diese sind mit Absteckzapfen ausgerüstet und passen spielfrei in die Absteckbohrungen im Rastenmaß (14) vorzugsweise beträgt dieses Maß 25 mm. Somit kann die Außenkontur der Silikonteile bzw. Primärformteile oder Werkzeuge im 25 bzw. 50 mm. Schritt verkleinert oder vergrößert werden.

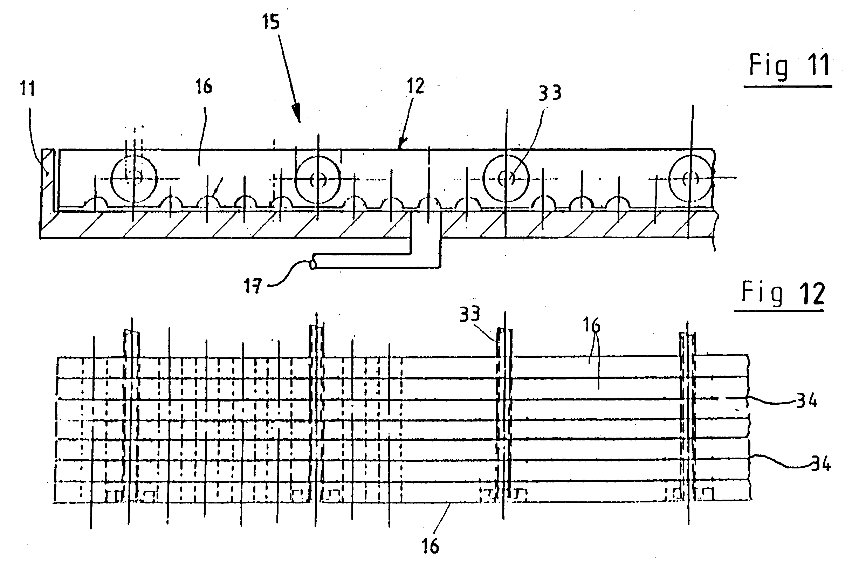

**Fig. 11** zeigt den Wagen schematisch im Schnitt. Hier ist der Wagen (11) dargestellt in dem eine Ausfräsung eingebracht ist in die der auswechselbare Rost (15) spielfrei eingelegt ist.

Die Lamellen (16) haben an der Unterseite halbrunde oder auch eckige Ausfräsungen, damit das Vakuum (17) sich gleichmäßig über die ganze Arbeitsfläche (12) des Rostes (15) verteilen kann.

**Fig. 12** zeigt die Draufsicht der Arbeitsfläche bzw. des auswechselbaren Rostes. Die Lamellen (16) werden mit dazwischen gelegten Distanzscheiben von 0,2mm Dicke, mit den Lamellen-Führungen (33) zusammengehalten. Somit sind leicht 0,2mm breite Ansaugöffnungen realisierbar. Bei direktem Kontakt mit der Metallschmelze sollen die Ansaugöffnungen maximal 0,2mm groß sein.

### BEZUGSZEICHENLISTE

- 1.: Modell
- 2.: Primärformteil
- 3.: Gießanlage
- 4.: Infrarot-Trockner
- 5.: Silikonabguß der Außenkontur
- 6.: Gießteil, Werkzeug-Düsenseite, Metall
- 7.: Gegenabguß der Außenkontur in Silikon
- 8.: Positiv-Abguß der Modell-Innenkontur in Silikon
- 9.: Formstempel, Auswerferseite
- 10.: Wandbegrenzungelemente
- 11.: Wagen
- 12.: Arbeitsfläche
- 13.: Vakuum
- 14.: Rastermaß
- 15.: Rost auswechselbar
- 16.: Lamellen
- 17.: Saugöffnung für Auflagefläche (Rost)
- 18.: Korrigiertes Breitenmaß
- 19.: Anschraubseite des Formstempels
- 20.: Korrigiertes Längenmaß
- 21.: Ofen-Ventil
- 22.: Schmelzaggregat
- 23.: Elektroden
- 24.: Ton-Primärformteil der Außenkontur
- 25.: Anschlag, Wagenfixierung
- 26.: Kühlanschluß des Wagens
- 27.: Schwundzugabe v. Breite
- 28.: Schwundzugabe v. Länge
- 29.: Zusatzaggregat (Schließeinheit)
- 30.: Stahlwerkzeug für Zusatzaggregat
- 31.: Kühlanschluß von Gieß-Anlage
- 32.: Teleskoparm
- 33.: Lamellen-Führung
- 34.: Lamellenabstand, Ansaugöffnung
- 35.: Sichtfenster
- 36.: Vakuumanschluß für Anlage

## Patentansprüche

1. Verfahren zur Herstellung von Formwerkzeugen insbesondere zum Spritzgießen, Blasformen, Schäumen und Erodieren oder dergleichen fallweise auch Maschinenbauteile dadurch gekennzeichnet, daß das Formwerkzeug (6, 9) mit einem Silikon-Zwischenschritt (5, 7) über ein Primärformteil (2) direkt vom Original-Funktions-Musterteil (1) abgenommen wird, ohne Schwundberücksichtigung.

2. Verfahren nach Anspruch 1, dadurch gekennzeichnet, daß von dem Silikon-Zwischenschritt (7) mit einem oder mehreren Primärformteilen (24), Erodier-Elektroden (23) in der Anlage (3) aus einer NE-Legierung hergestellt werden.

3. Verfahren nach Anspruch 1 und 2, dadurch gekennzeichnet, daß die Maße des Formwerkzeuges (6) dadurch korrigiert werden, in dem das fehlende Aufmaß (27, 28) auf der NE-Elektrode (23), leicht zu korrigieren ist, in dem der Schwund des zu verarbeitenden Kunststoffes, beginnend bei dem kleinsten zu korrigierenden Maß, meist ist es die Breite (18), zu dem geforderten Soll-Maß hinzugerechnet wird. Das Ist-Maß der Elektrode (23) feststellt und die Differenz alle 5 Seiten der Elektrode, mit der 1/2 Differenz exakt aufkupfert.

4. Verfahren nach Anspruch 1, dadurch gekennzeichnet, daß mit der in der Anlage (3) hergestellten NE-Elektrode (23) mit den aufgekupferten, korrigierten Maßen (27, 28) vom zu verarbeitenden Kunststoff ebenso in ein Stahlspritzgießwerkzeug erodiert werden kann, wie auch in die NE-Legierung, ebenso lassen sich die Elektroden (23) beliebig Duplizieren, z.B. für Schruppen, Schlichten und Feinschlichten,

5. Verfahren nach Anspruch 1 und 2, dadurch gekennzeichnet, daß nach Aufkupfern des ersten oder kleinsten Maßes des Formstempels (9) , das nächst größere, meist ist es die Länge (20), korrigiert wird. Nach der Ist-Maß Festellung wird der Schwund des zu verarbeitenden Kunststoffes zu dem nächst größeren Maß hinzugerechnet und die 1/2 Differenz, vorher die Flächen, bzw. das nächst kleinere Maß, meist ist es die Breite (18) abgedeckt, aufgekupfert.

6. Verfahren nach Anspruch 1 oder 2, dadurch gekennzeichnet, daß mit den in Anlage (3) hergestellten Elektroden (23), um die Schwundmaßdifferenz 27, 28) des NE-Metalles die Elektroden (23) aufgekupfert sind, ein Stahlwerkzeug (30) für die Serien-Produktion von NE-Maschinenteilen hergestellt wird um diese dann in der Anlage (3) im Vakuum (13), ohne Oberflächenspannung, mit der Schließeinheit (29) produzieren zu können. Sämtliche Produkte wie Formwerkzeuge u. Serien-Maschinenteile können mit leistungsfähigeren Metallschichten galvanisch überzogen bzw. aufgetragen werden.

7. Verfahren nach Anspruch 1 und 2, dadurch gekennzeichnet, daß mit der nicht aufgekupferten Elektrode (23), also bereits maßhaltigen Elektrode (23) in Stahl wie in die NE-Legierung Erodiert werden kann.

8. Verfahren nach Anspruch 1, dadurch gekennzeichnet, daß über einen schwundfreien Silikon-Zwischenschritt (8) als Positiv-Abguß der Innenseite des Modells, unter Zuhilfenahme der Wandelemente (10) mit dessen Hilfe beliebig viele Primärform-Tonabgüsse (2) hergestellt werden können, so auch oft die Auswerferseite vervielfältig werden kann.

9. Verfahren nach Anspruch 1, dadurch gekennzeichnet, daß nun der Schwund des zu verarbeitenden Kunststoffes zum Originalmodell (1)- oder Zeichnungsmaß hinzugerechnet, die 1/2 Differenz galvanisch aufgechromt oder aufgenickelt wird. Bei Übermaß z.B. vom Formstempel (9) kann dieses mit einer Gegenelektrode wieder korrigiert werden.

10. Vorrichtung zur Durchführung des Verfahrens nach Anspruch 1 und 2, dadurch gekennzeichnet, daß die Anlage (3) aus einem runden Behalter aus Stahl oder einem anderen Werkstoff, der der Belastung des Vakuums (13) statisch standhalten kann bzw. luftdicht sein muß, besteht und daß die Anlage (3) mit einem entsprechend großen Tor ausgerüstet, daß verschlossen, wieder luftdicht sein muß, wobei der Wagen (11) mit einer zusätzlichen Vakuumeinrichtung (17) und einer Kühlung (26) ausgerustet ist.

11. Vorrichtung nach Anspruch 10, dadurch gekennzeichnet, daß sich in der Anlage (3) das Metall-Schmelzaggregat (22) dasß an der Unterseite ein Ventil (21) besitzt, der Wagen (11) der fahrbar ausgerüstet, mit seinem auswechselbaren Rost (15) und die Infrarot-Strahlanlage (4) zum Trocknen der Primärformteile, sich in der Anlage (3) befindet und unter Vakuum (13) dort der Trocknungsprozess, der Gießprozess und Silikonierprozess stattfindet. Zur besseren Kontrolle sind ein oder mehrere Sichtfenster am Umfang des Behälters angeordnet.

12. Vorrichtung nach Anspruch 10-12, dadurch gekennzeichnet, daß bei Justierung der besten Füllposition, daß Schmelzaggregat (22) ebenfalls seine Position verändern kann, d.h. der Teleskoparm (32) der das Öffnen des Ventils (21) des Schmelzaggregates (22) bewerkstelligt, dem Rechnung trägt.

13. Vorrichtung nach Anspruch 2, dadurch gekennzeichnet daß mit Hilfe einer Schließeinheit (29) mit Hilfe einer in der Anlage (3) hergestellten Elektrode (23), mit einem erodierten Stahlwerkzeug (30), Maschinen-Serienteile hergestellt werden können, wobei das Stahlwerkzeug (30 mit der Kühlung (31) verbunden ist.

14. Vorrichtung nach Anspruch 2, dadurch gekennzeichnet, daß in der Anlage (3) Primär-Tonformen (24), wie auch NE-Metallwerkzeuge (6, 23), so auch die notwendigen Silikonabgüsse, mit Hilfe der im Rastermaß (14) vorzugsweise 25mm verstellbaren Seitenwände (10) hergestellt werden können.
